# FASCICULE DE BREVET EUROPEEN

(11) **EP 3 999 422 B1**
(45) Date de publication et mention de la délivrance du brevet: **30.08.2023**
(21) Numéro de dépôt: 20750311.1
(22) Date de dépôt: 06.07.2020
(51) Int. Cl.: B64C 21/01, B64D 33/02, B64C 1/16, B64D 27/20, B64D 29/04

(54) **ENSEMBLE PROPULSIF À INGESTION DE COUCHE LIMITE AMÉLIORÉ**
ANTRIEBSEINHEIT MIT VERBESSERTER AUFNAHME DER GRENZSCHICHT
PROPULSION UNIT WITH IMPROVED BOUNDARY LAYER INGESTION

(30) Priorité: 17.07.2019 FR 1908080
(43) Date de publication de la demande: 25.05.2022
(73) Titulaire: SAFRAN AIRCRAFT ENGINES, 75015 Paris (FR)
(72) Inventeur: CHANEZ, Philippe, Gérard, 77550 MOISSY-CRAMAYEL (FR); BOITEUX, Jean-Michel, Daniel, Paul, 77550 MOISSY-CRAMAYEL (FR); TANTOT, Nicolas, Jérôme, Jean, 77550 MOISSY-CRAMAYEL (FR)
(74) Mandataire: Cabinet Beau de Loménie
(86) Numéro de dépôt international: PCT/FR2020/051189
(87) Numéro de publication internationale: WO 2021/009433

(56) Documents cités:
- WO-A2-2015/198296
- FR-A- 1 499 853
- FR-A1- 2 919 267
- US-A- 3 465 990
- US-A1- 2015 122 952

## Description

### Domaine Technique

Le présent exposé concerne le domaine des moteurs d'aéronefs à ingestion de couche limite, et plus particulièrement un ensemble propulsif pour aéronefs comprenant de tels moteurs, et un aéronef comprenant un tel ensemble propulsif.

### Technique antérieure

Dans un objectif d'améliorer le rendement des moteurs d'aéronefs, notamment ceux propulsant les avions à long rayon d'action tels que des avions de type business ou longs courriers, une technique connue repose sur le principe d'ingestion de couche limite (dite « BLI » pour « Boundary Layer ingestion » en anglais) qui permet, en disposant le moteur de manière à ce qu'il puisse absorber la couche limite qui se développe sur le fuselage de l'avion, de réduire la trainée, tout en augmentant le rendement propulsif du moteur.

Plus précisément, le moteur est disposé de telle sorte que sa section d'entrée d'air soit affleurante à la surface du fuselage, voire en partie intégrée dans le fuselage de l'aéronef, de manière à ce que la couche limite se développant le long de la paroi dudit fuselage soit ingérée directement dans le moteur. Ainsi, la technique d'ingestion de couche limite présente au moins deux avantages.

D'une part, le fait que la couche limite absorbée ne frotte plus sur la partie fuselage qui est en aval de l'entrée d'air moteur, puisqu'elle est absorbée par cette entrée d'air et transformée en quantité de mouvement propulsive, permet de limiter la trainée de l'aéronef.

D'autre part, le fait que le flux entrant dans le moteur présente un Mach moyen sensiblement inférieur au Mach de vol de l'aéronef, du fait de la présence de la couche limite, se caractérise par une pression totale moyenne plus faible et donc une vitesse moyenne de l'écoulement d'air plus faible que la vitesse de vol. Par conséquent, la poussée motrice peut être obtenue avec une vitesse d'éjection de la tuyère plus faible que dans une installation classique, le terme « classique » désignant notamment les configurations pour lesquelles le moteur est disposé sous une aile de l'aéronef ou en installation latérale au fuselage à une distance supérieure à une fois le diamètre soufflante. En effet, la poussée est proportionnelle à la différence entre la vitesse d'éjection et la vitesse en entrée du moteur. Ainsi, en diminuant la vitesse d'entrée d'air, il est possible d'obtenir la même poussée pour une vitesse d'éjection plus faible. L'effort énergétique brut demandé au système propulsif pour créer cette différence de vitesse est donc plus faible, ce qui permet de diminuer le débit de carburant nécessaire. FR 1 499 853 A et US 3 465 990 A divulguent des exemples de moteurs d'avion à ingestion de couche limite.

Néanmoins, cette technique d'ingestion de couche limite présente des inconvénients. En particulier, bien que le Mach moyen en entrée du moteur soit plus faible que pour une installation classique, notamment avec une nacelle et un pylône disposés sous une aile ou en arrière du fuselage, cette moyenne cache une forte distorsion spatiale de pression totale sur la section d'entrée d'air. Cette distorsion est due au fait que la vitesse est plus faible au niveau de la couche limite, proche de la paroi du fuselage, que sur le reste de la section d'entrée d'air. Cette forte inhomogénéité du flux entrant dans le moteur a un impact négatif important en termes de performances aérodynamiques et de comportement aéro-mécanique. En particulier, elle impacte négativement le rendement polytropique de la soufflante et son comportement aéroélastique.

Il existe donc un besoin pour un ensemble propulsif permettant de pallier au moins en partie les inconvénients mentionnés ci-dessus.

### Exposé de l'invention

Le présent exposé concerne un ensemble propulsif pour aéronef, comprenant :
- un fuselage s'étendant le long d'un axe longitudinal et renfermant une enceinte interne,
- au moins un moteur caréné fixé au fuselage et comprenant une section d'entrée d'air, la section d'entrée d'air étant disposée au moins en partie dans l'enceinte interne,
- au moins une chambre de tranquillisation disposée dans l'enceinte interne en amont de la section d'entrée d'air et en communication fluidique avec ladite section d'entrée d'air,
- au moins une prise d'air formée sur une paroi externe du fuselage, l'entrée de la prise d'air étant en partie délimitée par ladite paroi externe du fuselage, la prise d'air étant configurée pour ingérer de l'air externe et le dévier vers la chambre de tranquillisation.

Dans le présent exposé, les termes « amont » et « aval » se réfèrent au sens de d'écoulement de l'air externe provenant de la région externe à l'ensemble propulsif, pénétrant dans l'enceinte interne et s'écoulant jusqu'à la section d'entrée d'air du moteur, par l'intermédiaire de la chambre de tranquillisation.

L'axe longitudinal du fuselage correspond à l'axe longitudinal d'un aéronef, s'étendant entre l'avant et l'arrière de ce dernier. L'axe longitudinal peut être parallèle à l'axe de rotation du ou des moteur(s). Par « moteur caréné », on comprend un moteur entouré par une paroi, ou nacelle, de forme globalement annulaire. Le moteur est de préférence un moteur à double flux caréné, comprenant, d'amont en aval, une soufflante, un compresseur basse pression, un compresseur haute pression, une chambre de combustion, une turbine haute pression et une turbine basse pression, le tout étant enveloppé dans un carénage. De manière alternative, le moteur peut être un moteur à propulsion distribuée, comprenant une soufflante carénée entraînée soit directement par un générateur de gaz comprenant d'amont en aval un compresseur, une chambre de combustion et une turbine, soit par l'intermédiaire d'un moteur électrique. La section d'entrée d'air du moteur correspond au plan dans lequel est disposée la soufflante du moteur. Par ailleurs, on comprend que l'entrée de la prise d'air est délimitée d'une part par une paroi de ladite prise d'air distincte de la paroi du fuselage, et d'autre part par la paroi même du fuselage. En d'autres termes, la prise d'air comprend une paroi rapportée au fuselage et raccordée continument à la paroi du fuselage. La paroi de la prise d'air peut par exemple prendre la forme d'un demi-tube fixé à la paroi du fuselage, de telle sorte que la paroi du fuselage délimite elle-même, en partie, la section d'entrée de la prise d'air. Ainsi, lorsque l'aéronef est en mouvement, la couche limite formée le long de la paroi externe du fuselage est directement ingérée par la prise d'air. L'ingestion de cette couche limite permet ainsi d'améliorer le rendement propulsif du moteur.

En outre, la chambre de tranquillisation est une cavité permettant d'homogénéiser l'écoulement entrant dans le moteur en termes de répartition circonférentielle et azimutale du vecteur vitesse de l'écoulement, tout en réduisant davantage le Mach moyen en entrée de ce moteur. Plus précisément, l'utilisation de la chambre de tranquillisation en amont de la section d'entrée du moteur permet d'obtenir une vitesse d'écoulement faible en amont du moteur tout en minimisant la distorsion de cet écoulement. Cela permet une optimisation conjointe du rendement propulsif, grâce à l'ingestion de la couche limite par la prise d'air, et du rendement polytropique de la soufflante (par minimisation de la distorsion), tout en limitant très fortement les sollicitations aéro-mécaniques des pales de la soufflante.

Dans certains modes de réalisation, la section d'entrée d'air du moteur est disposée entièrement dans l'enceinte interne du fuselage.

La section d'entrée est donc invisible depuis l'extérieur du fuselage. La totalité de la surface occupée par la section d'entrée est ainsi en communication fluidique avec la chambre de tranquillisation, ce qui permet d'améliorer davantage l'homogénéisation de l'écoulement, et de la pression à l'entrée du moteur.

Dans certains modes de réalisation, dans une vue perpendiculaire à la section d'entrée d'air du moteur, la surface de la chambre de tranquillisation inclue entièrement la surface de la section d'entrée d'air.

En d'autres termes, dans une vue perpendiculaire à la section d'entrée d'air du moteur, c'est-à-dire une vue parallèle à l'axe longitudinal du fuselage, la projection de la chambre de tranquillisation sur un plan comprenant la section d'entrée d'air du moteur entoure, c'est-à-dire englobe entièrement ladite section d'entrée d'air. Cela permet d'améliorer davantage l'homogénéisation de l'écoulement, et de la pression sur toute la surface de la section d'entrée du moteur, et ainsi d'améliorer le rendement polytropique de la soufflante.

Dans certains modes de réalisation, la prise d'air est une prise d'air fixe, l'ensemble comprenant au moins une prise d'air escamotable, configurée pour être mobile entre une position ouverte, permettant d'ingérer l'air externe via la prise d'air escamotable et le diriger vers la chambre de tranquillisation, et une position fermée, empêchant l'air externe de pénétrer dans la chambre de tranquillisation via la prise d'air escamotable.

Par « fixe », on comprend que les dimensions de la section d'entrée des prises d'air restent constantes dans toutes les phases de vol, au sol ou à l'arrêt. En d'autres termes, la paroi formant la prise d'air fixe reste immobile par rapport au fuselage pendant toutes ces phases. A l'inverse, par « escamotable », on comprend que les dimensions de la section d'entrée des prises d'air peuvent varier en fonction des phases de vol, au sol ou à l'arrêt. Par conséquent, en position ouverte, les prises d'air escamotables permettent d'ingérer une plus grande quantité d'air dans la chambre de tranquillisation. Cette augmentation de la quantité d'air ingérée est utile notamment en conditions statiques ou lors des phases de décollage, lorsque la vitesse de déplacement de l'ensemble est plus faible ou nulle, et que le débit d'air nécessaire pour alimenter le moteur est important. Ces prises d'air escamotables, ou prises d'air secondaires ou auxiliaires, sont ensuite refermées, de manière discrète, c'est-à-dire en passant directement de la position ouverte à la position fermée sans position intermédiaire, ou progressive, lorsque la phase décollage est terminée. De préférence, en position fermée, les prises d'air escamotables s'intègrent totalement dans la forme externe de la paroi du fuselage, c'est-à-dire dans la continuité de la paroi externe du fuselage, sans induire de relief le long de la surface du fuselage. Cela permet de limiter le risque de création de turbulence dans l'écoulement externe au fuselage, pouvant nuire au rendement du moteur. Par ailleurs, les domaines dans lesquels la ou les prise(s) d'air escamotable(s) sont en position ouverte peuvent être caractérisés par une altitude inférieure à 15000 pieds, et/ou des Mach de vol inférieurs à 0,45.

Dans certains modes de réalisation, une section d'entrée de la prise d'air fixe est au moins égale à la section d'entrée du moteur.

Lorsque l'ensemble comprend plusieurs prises d'air fixes et/ou plusieurs moteurs, la somme des sections d'entrée des prises d'air fixes doit représenter au moins la somme des sections d'entrée moteur, afin de permettre une alimentation correcte de la chambre de tranquillisation.

Dans certains modes de réalisation, une section d'entrée de la prise d'air escamotable en position ouverte est comprise entre 25 et 50% de la section de la prise d'air fixe. Pour certaines phases de vol, une ou des prises d'air escamotables peuvent être ajoutées.

Ces valeurs permettent d'assurer un débit d'ingestion d'air dans la chambre de tranquillisation suffisant, afin de permettre un rendement optimal du moteur.

Dans certains modes de réalisation, l'ensemble propulsif comprend au moins une rampe d'ingestion d'air creusée dans la paroi externe du fuselage par rapport à une surface de référence de ladite paroi, et s'étendant depuis une portion de ladite paroi externe située en amont de la prise d'air, jusqu'à la section d'entrée de ladite prise d'air.

Par « rampe creusée », on comprend une pente inclinée formée dans la paroi du fuselage, c'est-à-dire une partie creusée par rapport à une surface de référence de la paroi du fuselage, la surface de référence étant une surface moyenne de la paroi du fuselage située autour de la rampe, et ne présentant pas de relief. Cette surface de référence correspond à la l'enveloppe globale du fuselage. En d'autres termes, la rampe creusée représente une portion concave de la paroi du fuselage, dans la direction de l'enceinte interne. A l'inverse, les prises d'air représentent des portions convexes de la paroi du fuselage, dans une direction opposée à l'enceinte interne. La présence de cette rampe permet d'optimiser le maitre-couple des prises d'air, et le ralentissement de l'écoulement.

Dans certains modes de réalisation, l'ensemble propulsif comprend au moins un déflecteur mobile disposé dans la chambre de tranquillisation, et configuré pour passer d'une position déployée, dans laquelle il est configuré pour diriger l'air externe vers la section d'entrée d'air du moteur, et une position rétractée dans laquelle il est replié contre une paroi interne de la chambre de tranquillisation.

Les déflecteurs peuvent être fixés à une paroi de la chambre de tranquillisation ou au fuselage au moyen d'une liaison pivot. Leur déplacement entre la position déployée et rétractée peut être commandé à distance au moyen d'une unité de commande, commandant également les prises d'air escamotables. La position déployée des déflecteurs permet, lors du ralentissement de l'écoulement, de créer un canal, ou couloir de circulation dirigeant l'air vers l'entrée du moteur de manière plus directe. Cela permet de réduire les recirculations et les pertes de charges de cet écoulement dans la chambre de tranquillisation. Les domaines dans lesquels les déflecteurs sont en position déployée peuvent être également caractérisés par une altitude inférieure à 15000 pieds, et/ou des Mach de vol inférieurs à 0,45. En phase de vol, donc pour des vitesses d'écoulement de l'air plus élevées, les déflecteurs sont rétractés contre la paroi interne de la chambre de tranquillisation, de manière à ne pas entraver le passage de l'air dans la chambre de tranquillisation.

Dans certains modes de réalisation, l'ensemble propulsif comprend deux prises d'air fixes formées sur la paroi externe du fuselage, à deux extrémités opposées dudit fuselage, selon une direction radiale dudit fuselage.

Par « direction radiale », on comprend une direction perpendiculaire à l'axe longitudinal du fuselage. Ces deux prises d'air fixes permettent d'ingérer une quantité d'air suffisante, pour un fonctionnement optimal du moteur, dans la chambre de tranquillisation. La présence de deux prises d'air fixes est particulièrement adaptée en présence de deux moteurs.

Dans certains modes de réalisation, au moins certaines parois internes de la chambre de tranquillisation comprennent un matériau acoustique absorbant.

Le matériau acoustique peut notamment prendre la forme d'une structure en nid d'abeilles. En particulier, les cellules du nid d'abeilles peuvent être interposées entre une peau perforée orientée du côté de l'intérieur de la chambre de tranquillisation, et une peau pleine, la peau perforée permettant aux ondes sonores de pénétrer dans les cellules, dans lesquelles elles seront atténuées. De manière avantageuse, deux étages de cellules acoustiques séparées par une couche poreuse acoustiquement (« septum ») peuvent être prévues, les deux couches ayant des épaisseurs différentes, permettant ainsi d'atténuer des fréquences d'ondes différentes. La présence du matériau acoustique absorbant permet en outre d'améliorer la dissipation de l'énergie sonore émise par les soufflantes.

Dans certains modes de réalisation, le fuselage présente une section sensiblement elliptique comprenant un grand axe et un petit axe, le rapport entre le grand axe et le petit axe étant compris entre 1 et 2,5.

Par « sensiblement elliptique », on comprend que le fuselage présente une section de forme allongée, par exemple une forme oblongue ou ovoïde. Le grand axe et le petit axe s'étendent chacun dans une direction perpendiculaire à l'axe longitudinal du fuselage. L'utilisation d'un fuselage de ce type est particulièrement adaptée pour disposer deux moteurs, ou davantage, côte à côte dans le sens de la largeur, c'est-à-dire dans une direction perpendiculaire à l'axe longitudinal du fuselage.

Dans certains modes de réalisation, la chambre de tranquillisation présente une forme parallélépipédique.

Cette forme présente l'avantage d'être facile à mettre en oeuvre en termes de construction de l'aéronef, et est particulièrement adaptée aux fuselages présentant une section de forme allongée.

Dans certains modes de réalisation, la forme parallélépipédique de la chambre de tranquillisation comprend une largeur s'étendant le long du grand axe, une longueur s'étendant le long de l'axe longitudinal, et une hauteur s'étendant le long du petit axe.

Dans certains modes de réalisation, la largeur de la chambre de tranquillisation est comprise entre 2, 1E et 2,8E, où E est le diamètre de la section d'entrée du moteur. Le diamètre E de la section d'entrée du moteur peut être compris entre 1,5 m et 2,5 m. Dans certains modes de réalisation, la longueur de la chambre de tranquillisation est comprise entre 1,1E et 2,5E. Dans certains modes de réalisation, la hauteur de la chambre de tranquillisation est comprise entre 1,3E et 2,0E.

Ces valeurs de rapports entre les dimensions de la chambre de tranquillisation et le diamètre de la section d'entrée d'air du moteur permettent de limiter les phénomènes de recirculation dans la chambre, tout en optimisant l'effet de tranquillisation de l'écoulement, c'est-à-dire le ralentissement de l'écoulement, la minimisation de la distorsion et l'homogénéisation de l'écoulement à l'entrée du moteur. Cela permet d'améliorer davantage le rendement polytropique de la soufflante, tout en limitant très fortement les sollicitations aéro-mécaniques des pales de la soufflante.

Dans certains modes de réalisation, à l'entrée de la prise d'air fixe, un écartement maximal entre la paroi du fuselage et une paroi de la prise d'air fixe délimitant l'entrée de ladite prise d'air fixe, est compris entre 0,5E et 0,8E.

L'entrée de la prise d'air est comprise dans un plan, et est délimitée par la paroi de la prise d'air, formant, dans ce plan, une première ligne courbe, et la paroi du fuselage, formant une deuxième ligne courbe, de rayon de courbure différent de la première courbe. Ainsi, dans ce plan, un écartement entre la paroi du fuselage et la paroi de la prise d'air fixe est une distance entre un point de la première ligne courbe et un point de la deuxième ligne courbe, pour un rayon donné de la première ligne courbe. Ce rapport entre la valeur de cet écartement, et le diamètre de la section d'entrée d'air du moteur, permet d'optimiser le débit d'air entrant dans la chambre de tranquillisation.

Dans certains modes de réalisation, l'ensemble comprend deux moteurs disposés côte à côte le long du grand axe, la chambre de tranquillisation étant configurée pour alimenter les deux moteurs.

En d'autres termes, la chambre de tranquillisation englobe les sections d'entrée des deux moteurs. Cette configuration permet d'améliorer le rendement polytropique des deux soufflantes conjointement.

Le présent exposé concerne également un aéronef comprenant l'ensemble propulsif selon l'un quelconque des modes de réalisation précédents.

L'aéronef est de préférence de type rapide, caractérisé par des Mach de vol en phase de croisière supérieur à 0,6, et pouvant couvrir une gamme de taille permettant de transporter des passagers, allant du type « business jet » jusqu'à l'avion long-courrier. L'aéronef peut également être du type « aile volante ». Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en perspective d'un aéronef, selon l'art antérieur, utilisant le principe de l'ingestion de couche limite ;
[Fig. 2A-2B] La figure 2A représente une vue en perspective d'un ensemble propulsif selon un mode de réalisation du présent exposé comprenant une prise d'air escamotable en position fermée, et la figure 2B représente l'ensemble propulsif de la figure 2A dans lequel la prise d'air escamotable est en position ouverte ;
[Fig. 3] La figure 3 représente une vue selon un plan de coupe perpendiculaire à l'axe longitudinal de l'ensemble propulsif des figures 2A et 2B ;
[Fig. 4] La figure 4 représente schématiquement une vue de dessus, et en transparence, d'un ensemble propulsif selon un mode de réalisation du présent exposé comprenant deux prises d'air escamotables ;
[Fig. 5] La figure 5 représente une vue de côté de l'ensemble propulsif de la figure 4 ;
[Fig. 6] La figure 6 représente une vue en perspective de la chambre de tranquillisation seule de l'ensemble propulsif des figures 4 et 5 ;
[Fig. 7] La figure 7 représente une vue de dessus et partielle d'un exemple modifié de l'ensemble propulsif de la figure 4 ;
[Fig. 8] La figure 8 représente une vue de dessus et partielle d'un exemple modifié de l'ensemble propulsif de la figure 4 ;
[Fig. 9] La figure 9 représente une vue de dessus d'un autre exemple modifié de l'ensemble propulsif de la figure 4.

### Description des modes de réalisation

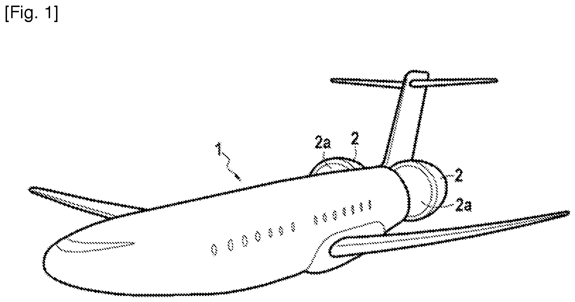

La figure 1 présente une vue en perspective d'un aéronef selon l'art antérieur, utilisant le principe d'ingestion de la couche limite. L'aéronef comprend un fuselage 1, et deux moteurs 2 fixés sur le fuselage 1 à l'arrière de l'aéronef. Les moteurs 2 sont disposés de manière à ce que leur section d'entrée d'air 2a soit disposée en partie dans l'enceinte interne renfermée par le fuselage 1. De cette manière, seule une partie des moteurs 2 est visible depuis l'extérieur de l'aéronef, l'autre partie étant dissimulée à l'intérieur de ce dernier. Ainsi, la couche limite se formant sur la paroi externe du fuselage 1 lors du déplacement de l'aéronef en vol, est directement ingérée par les moteurs 2.

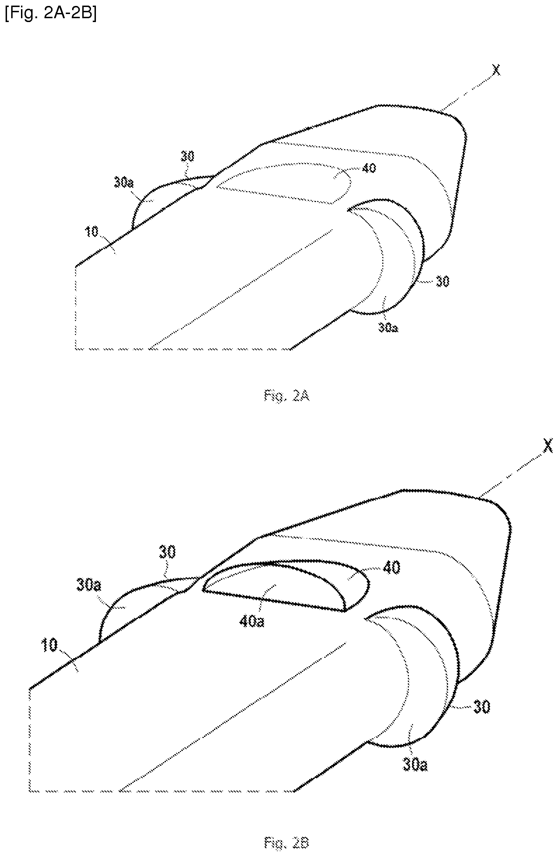

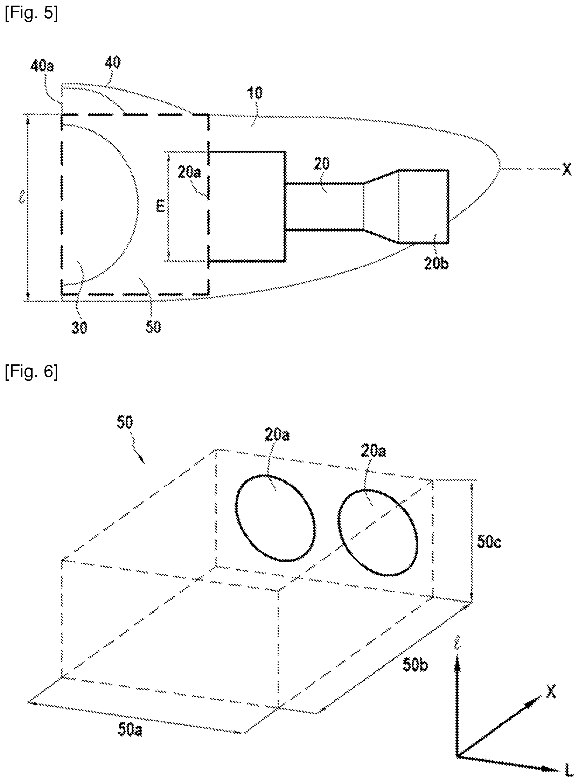

La suite de la description décrit un ensemble propulsif selon un mode de réalisation du présent exposé, en référence aux figures 2A à 5. Le mode de réalisation décrit dans la suite de la description présente une configuration dans laquelle le fuselage a une forme sensiblement elliptique, ou oblongue, et comprend deux moteurs disposés côte à côte. Néanmoins, l'invention n'est pas limitée à cette configuration. Le fuselage peut présenter une forme cylindrique, ou d'autres formes. Par ailleurs, le nombre de moteurs peut être supérieur à deux.

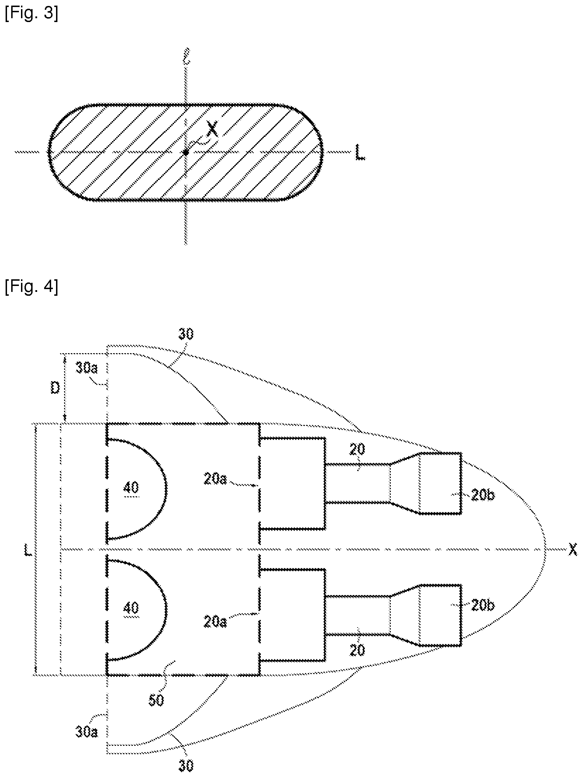

La figure 2A présente schématiquement une vue en perspective d'un ensemble propulsif selon le présent exposé. L'ensemble propulsif comprend un fuselage 10, renfermant une enceinte interne, non visible sur la figure 2A. Le fuselage 10 s'étend le long d'un axe longitudinal X. Dans une vue en coupe perpendiculaire à l'axe longitudinal X (figure 3), le fuselage 10 présente un grand axe L s'étendant selon une direction perpendiculaire à l'axe longitudinal X, et un petit axe I s'étendant selon une direction perpendiculaire à l'axe longitudinal X et au grand axe L. Le rapport entre le grand axe L et le petit axe I peut être compris entre 1 et 2,5.

Dans la suite de la description, les termes « au-dessus », « latéral », « côté » et leurs dérivés sont considérés selon le grand axe et le petit axe de l'ellipse formée par le fuselage. Plus précisément, une vue du dessus correspond à une vue selon une direction parallèle au petit axe I, c'est-à-dire une vue perpendiculaire au plan formée par les axes X et L, et une vue de côté correspond à une vue selon une direction parallèle au grand axe L, c'est-à-dire une vue perpendiculaire formée par les axes X et I. En d'autres termes, lorsque l'ensemble propulsif est disposé sur un aéronef, les côtés du fuselage 10 correspondent aux côtés sur lesquels sont disposées les ailes de l'aéronef, et le dessus du fuselage 10 correspond à la face sur laquelle une dérive peut être disposée.

Les deux moteurs 20 sont disposés côte à côte selon le grand axe L. Dans ce mode de réalisation, les moteurs 20 sont disposés entièrement dans l'enceinte interne du fuselage 10, et ne sont pas visibles sur la figure 2A. En particulier, la section d'entrée d'air 20a des moteurs 20 est disposée entièrement dans l'enceinte interne, et est donc entièrement entourée par la paroi du fuselage 10. Bien entendu, la tuyère d'éjection 20b des moteurs 20 est disposée à l'extérieur de l'enceinte interne. Pour ce faire, une ouverture (non représentée), permettant le passage des moteurs 20, peut être prévue à l'extrémité arrière du fuselage 10, lorsque l'ensemble propulsif est monté dans un aéronef. De cette manière, les moteurs 20 sont fixés sur le fuselage 10 de telle sorte que leur section d'entrée d'air 20a soit disposée dans l'enceinte interne, et que leur tuyère d'éjection d'air 20b soit disposée à l'extérieur du fuselage 10, permettant ainsi l'éjection des gaz.

L'ensemble propulsif comprend deux prises d'air fixes 30 disposées de part et d'autre du fuselage 10 selon le grand axe L, autrement dit sur les côtés du fuselage 10. Les prises d'air 30, ou écopes, sont formées comme des discontinuités dans la paroi externe du fuselage 10, ou encore des bouches formées sur ladite paroi. En particulier, une extrémité amont des prises d'air 30 présente une paroi en arc de cercle détachée de la paroi du fuselage 10, et suivant sensiblement la forme de la paroi externe du fuselage 10 dans cette région du fuselage 10. Toutefois, le rayon de courbure de la paroi des prises d'air 30 est inférieur au rayon de courbure de la paroi du fuselage 10 dans cette même région. Ainsi, la paroi des prises d'air 30 et la paroi du fuselage 10 à cette extrémité amont forment ensemble une section d'entrée 30a présentant la forme d'un croissant. L'extrémité aval des prises d'air 30 est connectée de manière continue à la paroi du fuselage 10.

De préférence, la somme des sections d'entrée 30a des prises d'air fixes 30 est au moins égale à la section d'entrée du (ou des) moteur(s). Par exemple, la somme des sections d'entrée 30a des prises d'air 30 peut être égale à : nombre_de_moteurs x CD × π ((E/2)²) où E est le diamètre de la section d'entrée du ou des moteur(s) et CD un coefficient compris entre 1.1 et 1.3. Par ailleurs, un écartement maximal D entre la prise d'air 30 et le fuselage 10 est compris entre 0,5E et 0,8E, où E est le diamètre de la section d'entrée 20a des moteurs 20. Un écartement entre la prise d'air 30 et le fuselage 10 est considéré comme la distance, au niveau de la section d'entrée 30a, entre la paroi de la prise d'air 30 et la paroi du fuselage 10, pour un rayon donné de la prise d'air 30.

L'ensemble propulsif comprend en outre au moins une prise d'air escamotable 40, en plus des prises d'air fixes 30. La ou les prise(s) d'air escamotable(s) 40 sont disposées sur le dessus du fuselage 10, c'est-à-dire sur une face supérieure du fuselage 10. La figure 4 présente un exemple dans lequel deux prises d'air escamotables 40 sont disposées au-dessus du fuselage 10. Elles sont mobiles entre une position fermée et une position ouverte. Le passage de la position fermée à la position ouverte, et inversement, peut être réalisé par l'intermédiaire de pivot mécanique. En position ouverte, les prises d'air escamotables 40 présentent une section d'entrée 40a représentant entre 25 et 50% de la section d'entrée 30a des prises d'air fixes 30. Par exemple, pour un diamètre de soufflante de 85 pouces, correspondant à environ 216 cm de diamètre, une section d'entrée 40a des prises d'air escamotables 40 en position ouverte est comprise entre 0,8 et 1,2 m², et la section d'entrée 30a des prises d'air fixes 30 est comprise entre 3 et 3,5 m². En position fermée, les prises d'air escamotables 40 présentent une section d'entrée 40a nulle.

Une chambre de tranquillisation 50 est disposée dans l'enceinte interne du fuselage 10. Dans cet exemple, la chambre de tranquillisation présente une forme parallélépipédique. Cette forme est adaptée à la forme générale du fuselage 10. Néanmoins, cette forme de la chambre de tranquillisation n'est pas limitative, et peut varier en fonction de la forme dudit fuselage. En particulier, la forme de la chambre de tranquillisation peut suivre globalement la forme de la paroi interne du fuselage. Par exemple, si le fuselage présente une forme cylindrique, la chambre de tranquillisation peut elle-même présenter une forme cylindrique.

Dans ce mode de réalisation, la chambre de tranquillisation 50 présente une largeur 50a s'étendant le long du grand axe L, une longueur 50b s'étendant le long de l'axe longitudinal X, et une hauteur 50c s'étendant le long du petit axe I. De préférence, la largeur 50a est comprise entre 2,1E et 2,8E, la longueur est comprise entre 1,1E et 2,5E, et la hauteur 50c est comprise entre 1,3E et 2,0E.

Par ailleurs, les moteurs 20 sont disposés de manière à ce que leur section d'entrée 20a soit entièrement en vis-à-vis de la chambre de tranquillisation 50, de manière à ce que toute la surface des sections d'entrée 20a communique avec le volume de la chambre de tranquillisation 50. Pour cela, une extrémité inférieure des sections d'entrée 20a est disposée au-dessus de la paroi de fond de la chambre de tranquillisation 50, et une extrémité supérieure des sections d'entrée 20a est disposée en dessous de la paroi supérieure de la chambre de tranquillisation 50. En d'autres termes, la surface formée par la largeur 50a et la hauteur 50c est supérieure à la somme des sections d'entrée 20a des deux moteurs 20, et englobe à la fois ces deux sections d'entrée 20a.

Les prises d'air fixes 30 sont en communication fluidique avec la chambre de tranquillisation 50, de manière à ce que l'air ingéré par les prises d'air fixes 30 soit dévié et dirigé vers l'intérieur de la chambre de tranquillisation 50. De même, les prises d'air escamotables 40 sont en communication fluidique avec la chambre de tranquillisation 50 lorsqu'elles sont en position ouverte, de manière à ce que l'air ingéré par les prises d'air escamotables 40 soit dévié et dirigé vers l'intérieur de la chambre de tranquillisation 50. A l'inverse, lorsque les prises d'air escamotables 40 sont en position fermée, l'air extérieur ne peut plus pénétrer dans la chambre de tranquillisation 50 via les prises d'air escamotables 40. En d'autres termes, dans cette configuration, seules les prises d'air fixes 30 permettent l'ingestion de l'air extérieur dans la chambre de tranquillisation 50. En outre, dans cette configuration, la paroi des prises d'air escamotables 40 se trouve dans la continuité de la paroi du fuselage 10, donnant à celle-ci une apparence lisse et sans relief par rapport à la surface de référence.

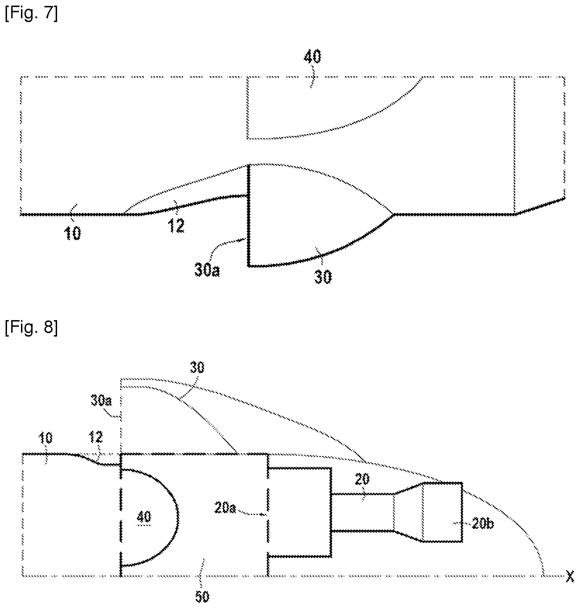

Les figures 7 et 8 présentent un exemple modifié du mode de réalisation du présent exposé, dans lequel l'ensemble propulsif comporte une rampe 12 formée dans la paroi du fuselage 10. Plus précisément, une rampe 12 peut être formée en amont de chaque prise d'air 30. Dans une vue de dessus de l'ensemble propulsif, la rampe 12 présente la forme d'une pente inclinée formée et creusée dans la paroi du fuselage 10, et descendant depuis une portion de ladite paroi située en amont de la prise d'air 30, jusqu'à la section d'entrée 30a de ladite prise d'air 30, augmentant par conséquent la section d'entrée 30a.

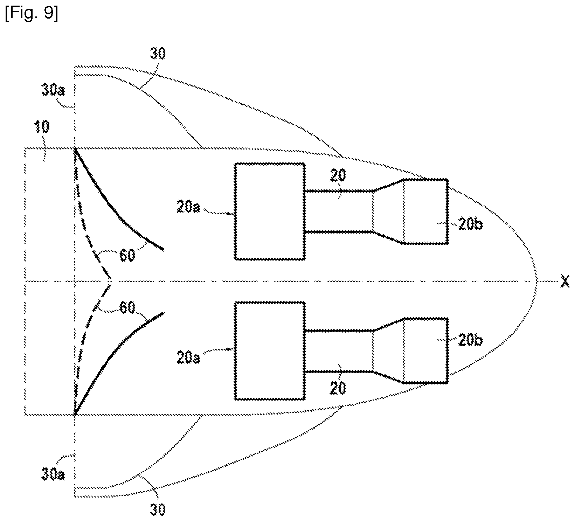

La figure 9 présente un autre exemple modifié du mode de réalisation du présent exposé, dans lequel l'ensemble propulsif comporte des déflecteurs mobiles 60. Plus précisément, un déflecteur mobile 60 peut être prévu pour chaque prise d'air fixe 30. Les déflecteurs mobiles 60 sont mobiles entre une position déployée (illustrée en trait plein sur la figure 9) et une position rétractée (illustrée en trait interrompus sur la figure 9). Dans la position déployée, les déflecteurs mobiles 60 dévient l'air entrant par les prises d'air fixes 30 dans la chambre de tranquillisation 50 vers les sections d'entrée 20a des moteurs 20. En position rétractée, les déflecteurs mobiles 60 sont repliés contre une paroi interne de la chambre de tranquillisation 50, et ne permettent donc plus de dévier l'air.

Bien que la présente invention ait été décrite en se référant à des exemples de réalisation spécifiques, il est évident que des modifications et des changements peuvent être effectués sur ces exemples sans sortir de la portée de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Ensemble propulsif pour aéronef, comprenant :
- un fuselage (10) s'étendant le long d'un axe longitudinal (X) et renfermant une enceinte interne,
- au moins un moteur (20) caréné fixé au fuselage (10) et comprenant une section d'entrée d'air (20a), la section d'entrée d'air (20a) étant disposée au moins en partie dans l'enceinte interne, et
- au moins une prise d'air (30) formée sur une paroi externe du fuselage (10), l'entrée (30a) de la prise d'air (30) étant en partie délimitée par ladite paroi externe du fuselage (10),
- l'ensemble propulsif étant **caractérisé en ce qu'**il comprend au moins une chambre de tranquillisation (50) disposée dans l'enceinte interne en amont de la section d'entrée d'air (20a) et en communication fluidique avec ladite section d'entrée d'air (20a), et configurée pour homogénéiser et réduire la vitesse de l'écoulement entrant dans le moteur (20), et
**en ce que** la prise d'air (30) est configurée pour ingérer de l'air externe et le dévier vers la chambre de tranquillisation (50).

2. Ensemble selon la revendication 1, dans lequel la section d'entrée d'air (20a) du moteur (20) est disposée entièrement dans l'enceinte interne du fuselage (10).

3. Ensemble selon la revendication 1 ou 2, dans lequel, dans une vue perpendiculaire à la section d'entrée d'air (20a) du moteur (20), la surface de la chambre de tranquillisation (50) inclut entièrement la surface de la section d'entrée d'air (20a).

4. Ensemble selon l'une quelconque des revendications 1 à 3, dans lequel la prise d'air (30) est une prise d'air fixe, l'ensemble comprenant au moins une prise d'air escamotable (40), configurée pour être mobile entre une position ouverte, permettant d'ingérer l'air externe via la prise d'air escamotable (40) et le diriger vers la chambre de tranquillisation (50), et une position fermée, empêchant l'air externe de pénétrer dans la chambre de tranquillisation (50) via la prise d'air escamotable (40).

5. Ensemble selon l'une quelconque des revendications 1 à 3, comprenant au moins une rampe d'ingestion d'air (12) creusée dans la paroi externe du fuselage (10) par rapport à une surface de référence de ladite paroi, et s'étendant depuis une portion de ladite paroi externe située en amont de la prise d'air (30), jusqu'à la section d'entrée (30a) de ladite prise d'air (30).

6. Ensemble selon l'une quelconque des revendications 1 à 5, comprenant au moins un déflecteur mobile (60) disposé dans la chambre de tranquillisation (50), et configuré pour passer d'une position déployée, dans laquelle le déflecteur mobile (60) est configuré pour diriger l'air externe vers la section d'entrée d'air (20a) du moteur (20), et une position rétractée dans laquelle le déflecteur mobile (60) est replié contre une paroi interne de la chambre de tranquillisation (50).

7. Ensemble selon l'une quelconque des revendications 1 à 6, comprenant deux prises d'air fixes (30) formées sur la paroi externe du fuselage (10), à deux extrémités opposées dudit fuselage (10), selon une direction radiale dudit fuselage (10).

8. Ensemble selon l'une quelconque des revendications 1 à 7, dans lequel au moins certaines parois internes de la chambre de tranquillisation (50) comprennent un matériau acoustique absorbant.

9. Ensemble selon l'une quelconque des revendications 1 à 8, dans lequel le fuselage (10) présente une section sensiblement elliptique comprenant un grand axe (L) et un petit axe (I), le rapport entre le grand axe (L) et le petit axe (I) étant compris entre 1 et 2,5.

10. Ensemble selon la revendication 9, dans lequel la chambre de tranquillisation présente une forme parallélépipédique comprenant une largeur (50a) s'étendant le long du grand axe (L), une longueur (50b) s'étendant le long de l'axe longitudinal (X), et une hauteur (50c) s'étendant le long du petit axe (I), dans lequel la largeur (50a) est comprise entre 2,1E et 2,8E, la longueur (50b) est comprise entre 1,1E et 2,5E, et la hauteur (50c) est comprise entre 1,3E et 2,0 E, où E est le diamètre de la section d'entrée d'air (20a) du moteur.

11. Ensemble selon la revendication 4 et l'une quelconque des revendications 5 à 10, dans lequel, à l'entrée de la prise d'air fixe (30), un écartement maximal (D) entre la paroi du fuselage (10) et une paroi de la prise d'air fixe (30) délimitant l'entrée de ladite prise d'air fixe (30), est compris entre 0,5E et 0,8E, où E est le diamètre de la section d'entrée d'air (20a) du moteur (20).

12. Ensemble selon l'une quelconque des revendications 1 à 11, comprenant deux moteurs (20) disposés côte à côte le long du grand axe (L), la chambre de tranquillisation (50) étant configurée pour alimenter les deux moteurs (20).

13. Aéronef comprenant l'ensemble propulsif selon l'une quelconque des revendications précédentes.

## Patentansprüche

1. Antriebseinheit für ein Fluggerät, umfassend:
- einen Rumpf (10), der sich entlang einer Längsachse (X) erstreckt und ein inneres Gehäuse einschließt,
- mindestens ein Manteltriebwerk (20), das am Rumpf (10) befestigt ist und einen Lufteinströmquerschnitt (20a) umfasst, wobei der Lufteinströmquerschnitt (20a) mindestens teilweise im inneren Gehäuse angeordnet ist, und
- mindestens einen Lufteinlass (30), der auf einer Außenwand des Rumpfs (10) ausgebildet ist, wobei der Eingang (30a) des Lufteinlasses (30) teilweise durch die Außenwand des Rumpfs (10) begrenzt ist,
wobei die Antriebseinheit **dadurch gekennzeichnet ist, dass** sie mindestens eine Plenumskammer (50) umfasst, die im inneren Gehäuse dem Lufteinströmquerschnitt (20a) vorgelagert und in Fluidkommunikation mit dem Lufteinströmquerschnitt (20a) angeordnet und ausgelegt ist, um die Geschwindigkeit der in das Triebwerk (20) eintretenden Strömung zu vereinheitlichen und zu reduzieren, und
dadurch, dass der Lufteinlass (30) ausgelegt ist, um Außenluft aufzunehmen und sie zur Plenumskammer (50) umzuleiten.

2. Einheit nach Anspruch 1, wobei der Lufteinströmungsquerschnitt (20a) des Triebwerks (20) vollkommen im inneren Gehäuse des Rumpfs (10) angeordnet ist.

3. Einheit nach Anspruch 1 oder 2, wobei in einer senkrechten Ansicht auf den Lufteinströmquerschnitt (20a) des Triebwerks (20) die Oberfläche der Plenumskammer (50) die Oberfläche des Lufteinströmquerschnitts (20a) vollständig einschließt.

4. Einheit nach einem der Ansprüche 1 bis 3, wobei der Lufteinlass (30) ein fester Lufteinlass ist, wobei die Einheit mindestens einen klappbaren Lufteinlass (40) umfasst, der ausgelegt ist, um zwischen einer offenen Position, die erlaubt, Außenluft über den klappbaren Lufteinlass (40) aufzunehmen und sie zur Plenumskammer (50) zu lenken, und einer geschlossenen Position, die verhindert, dass die Außenluft in die Plenumskammer (50) über den klappbaren Lufteinlass (40) eindringen kann, beweglich zu sein.

5. Einheit nach einem der Ansprüche 1 bis 3, die mindestens eine Luftaufnahmerampe (12) umfasst, die in die Außenwand des Rumpfs (10) im Verhältnis zu einer Referenzoberfläche der Wand eingearbeitet ist und sich ab einem Abschnitt der Außenwand, der sich dem Lufteinlass (30) vorgelagert befindet, bis zum Einströmquerschnitt (30a) des Lufteinlasses (30) erstreckt.

6. Einheit nach einem der Ansprüche 1 bis 5, die mindestens einen beweglichen Abweiser (60) umfasst, der in der Plenumskammer (50) angeordnet und ausgelegt ist, um aus einer ausgefahrenen Position, in welcher der bewegliche Abweiser (60) ausgelegt ist, um die Außenluft zum Lufteinströmquerschnitt (20a) des Triebwerks (20) zu lenken, und einer eingefahrenen Position, in welcher der bewegliche Abweiser (60) an eine Innenwand der Plenumskammer (50) geklappt ist, zu wechseln.

7. Einheit nach einem der Ansprüche 1 bis 6, die zwei feste Lufteinlässe (30) umfasst, die auf der Außenwand des Rumpfs (10) an zwei gegenüberliegenden Enden des Rumpfs (10) gemäß einer radialen Richtung des Rumpfs (10) ausgebildet sind.

8. Einheit nach einem der Ansprüche 1 bis 7, wobei mindestens einige Innenwände der Plenumskammer (50) ein schallschluckendes Material umfassen.

9. Einheit nach einem der Ansprüche 1 bis 8, wobei der Rumpf (10) einen etwa elliptischen Querschnitt aufweist, der eine große Achse (L) und eine kleine Achse (I) aufweist, wobei das Verhältnis zwischen der großen Achse (L) und der kleinen Achse (I) zwischen 1 und 2,5 liegt.

10. Einheit nach Anspruch 9, wobei die Plenumskammer eine parallelepipedische Form aufweist, die eine Breite (50a) umfasst, die sich entlang der großen Achse (L) erstreckt, eine Länge (50b), die sich entlang der Längsachse (X) erstreckt, und eine Höhe (50c), die sich entlang der kleinen Achse (I) erstreckt, wobei die Breite (50a) zwischen 2,1E und 2,8E liegt, die Länge (50b) zwischen 1,1E und 2,5E liegt und die Höhe (50c) zwischen 1,3E und 2,0E liegt, wobei E der Durchmesser des Lufteinströmquerschnitts (20a) des Triebwerks ist.

11. Einheit nach Anspruch 4 und einem der Ansprüche 5 bis 10, wobei am Eingang des festen Lufteinlasses (30) ein maximaler Abstand (D) zwischen der Wand des Rumpfs (10) und einer Wand des festen Lufteinlasses (30), welche den Eingang des festen Lufteinlasses (30) begrenzt, zwischen 0,5E und 0,8E liegt, wobei E der Durchmesser des Lufteinströmquerschnitts (20a) des Triebwerks (20) ist.

12. Einheit nach einem der Ansprüche 1 bis 11, die zwei Triebwerke (20) umfasst, die nebeneinander entlang der großen Achse (L) angeordnet sind, wobei die Plenumskammer (50) ausgelegt ist, um die zwei Triebwerke (20) zu versorgen.

13. Fluggerät, das die Antriebseinheit nach einem der vorangehenden Ansprüche umfasst.

## Claims

1. A propulsion assembly for an aircraft, comprising:
- a fuselage (10) extending along a longitudinal axis (X) and enclosing an inner enclosure,
- at least one ducted engine (20) fixed to the fuselage (10) and comprising an air inlet section (20a), the air inlet section (20a) being disposed at least partly in the inner enclosure, and
- at least one air intake (30) formed on an outer wall of the fuselage (10), the inlet (30a) of the air intake (30) being partly delimited by said outer wall of the fuselage (10),
- the propulsion assembly being **characterized in that** it comprises at least one plenum chamber (50) disposed in the inner enclosure upstream of the air inlet section (20a) and in fluid communication with said air inlet section (20a), and configured to homogenize and reduce the speed of the flow entering the engine (20), and **in that** the air intake (30) is configured to ingest external air and deflect it towards the plenum chamber (50).

2. The assembly according to claim 1, wherein the air inlet section (20a) of the engine (20) is disposed entirely in the inner enclosure of the fuselage (10).

3. The assembly according to claim 1 or 2, wherein, in a view perpendicular to the air inlet section (20a) of the engine (20), the surface of the plenum chamber (50) fully includes the surface of the air inlet section (20a).

4. The assembly according to any one of claims 1 to 3, wherein the air intake (30) is a fixed air intake, the assembly comprising at least one retractable air intake (40), configured to be movable between an open position for ingesting the external air via the retractable air intake (40) and directing it towards the plenum chamber (50) and a closed position preventing external air from entering the plenum chamber (50) via the retractable air intake (40).

5. The assembly according to any one of claims 1 to 3, comprising at least one air ingestion ramp (12) hollowed out in the outer wall of the fuselage (10) relative to a reference surface of said wall and extending from a portion of said outer wall located upstream of the air intake (30) up to the inlet section (30a) of said air intake (30).

6. The assembly according to any one of claims 1 to 5, comprising at least one movable deflector (60) disposed in the plenum chamber (50) and configured to switch from a deployed position in which the movable deflector (60) is configured to direct the external air towards the air inlet section (20a) of the engine (20), and a retracted position in which the movable deflector (60) is folded against an inner wall of the plenum chamber (50).

7. The assembly according to any one of claims 1 to 6, comprising two fixed air intakes (30) formed on the outer wall of the fuselage (10), at two opposite ends of said fuselage (10), along a radial direction of said fuselage (10).

8. The assembly according to any one of claims 1 to 7, wherein at least some inner walls of the plenum chamber (50) comprise an acoustically absorbent material.

9. The assembly according to any one of claims 1 to 8, wherein the fuselage (10) has a substantially elliptical section comprising a major axis (L) and a minor axis (I), the ratio between the major axis (L) and the minor axis (I) being comprised between 1 and 2.5.

10. The assembly according to claim 9, wherein the plenum chamber has a parallelepiped shape comprising a width (50a) extending along the major axis (L), a length (50b) extending along the longitudinal axis (X) and a height (50c) extending along the minor axis (I), wherein the width (50a) is comprised between 2.1E and 2.8E, the length (50b) is comprised between 1.1E and 2.5E and the height (50c) is comprised between 1.3E and 2.0E, where E is the diameter of the air inlet section (20a) of the engine.

11. The assembly according to claim 4 and any one of claims 5 to 10, wherein, at the inlet of the fixed air intake (30), a maximum spacing (D) between the wall of the fuselage (10) and a wall of the fixed air intake (30) delimiting the inlet of said fixed air intake (30) is comprised between 0.5E and 0.8E, where E is the diameter of the air inlet section (20a) of the engine (20).

12. The assembly according to any one of claims 1 to 11, comprising two engines (20) disposed side by side along the major axis (L), the plenum chamber (50) being configured to power the two engines (20).

13. An aircraft comprising the propulsion assembly according to any one of the preceding claims.
